(19) Europäisches Patentamt
European Patent Office
Office européen des brevets

(11) **EP 2 072 992 B1**

(12) **EUROPÄISCHE PATENTSCHRIFT**

(45) Veröffentlichungstag und Bekanntmachung des Hinweises auf die Patenterteilung:
**12.03.2014 Patentblatt 2014/11**

(51) Int Cl.:
***G01M 15/10*** (2006.01)

(21) Anmeldenummer: **08169779.9**

(22) Anmeldetag: **24.11.2008**

(54) **Verfahren und Vorrichtung zur Beurteilung der Restlebensdauer einer Sensoreinheit**

Method and device for assessing the remaining lifespan of a sensor unit

Procédé et dispositif destinés à l'évaluation de la durée de vis restante d'une unité de capteur

(84) Benannte Vertragsstaaten:
**AT CH DE FR GB IT LI**

(30) Priorität: **19.12.2007 AT 75307 U**

(43) Veröffentlichungstag der Anmeldung:
**24.06.2009 Patentblatt 2009/26**

(73) Patentinhaber: **AVL List GmbH**
**8020 Graz (AT)**

(72) Erfinder:
• **Mayrhofer, Norbert**
**8010, Graz (AT)**
• **Harms, Klaus-Christoph**
**8051, Graz (AT)**
• **Rzehorska, Martin**
**8120, Peggau (AT)**
• **Teichmann, Rüdiger**
**8075, Hart bei Graz (AT)**

(74) Vertreter: **Weiss, Christian et al**
**Pinter & Weiss OG**
**Patentanwälte**
**Prinz-Eugen-Strasse 70**
**1040 Wien (AT)**

(56) Entgegenhaltungen:
**DE-A1- 10 045 370 US-A- 5 564 273**

**Beschreibung**

Die gegenständliche Erfindung betrifft ein Verfahren und eine Vorrichtung zur Beurteilung der Restlebensdauer eines an einer zyklisch arbeitenden Maschine angebrachten und für eine bestimmte Anzahl von Belastungszyklen spezifizieren Sensors, wobei die Belastungszyklen des Sensors gezählt werden, sowie die Anwendung einer erfindungsgemäßen Vorrichtung an einem Verbrennungsmotor.

An einer zyklisch arbeitenden Maschine, wie z.B. einem Verbrennungsmotor oder einer Spritzgussmaschine, werden häufig Sensoren angebracht, um bestimmte Messgrößen der Maschine laufend zu erfassen. Solche Sensoren unterliegen einem natürlichen Verschleiß und weisen daher eine bestimmte Lebensdauer auf. Die Lebensdauer wird dabei in der Regel in einer spezifizierten zulässigen Anzahl von Belastungszyklen angegeben. Ein Belastungszyklus ist dabei ein Arbeitszyklus, z.B. ein Verbrennungszyklus bei einem Verbrennungsmotor oder ein Gussvorgang bei einer Spritzgussmaschine, der wiederkehrend auftritt. Die Sensoren müssen folglich regelmäßig gewechselt werden, bevor diese ausfallen oder Resultate in unzureichender Qualität oder Genauigkeit liefern. Bis jetzt werden die Sensoren entweder nach einer festgelegten Betriebsdauer gewechselt, oder es werden die einzelnen Belastungszyklen einfach gezählt und vor Erreichen der spezifizierten Lebensdauer der Sensor ausgetauscht.

In der Praxis ist die Lebensdauer aber stark abhängig von der tatsächlichen auftretenden Belastung des Sensors. Wird der Sensor hauptsächlich bei niedrigen Belastungen betrieben, so kann sich die Lebensdauer verlängern. Umgekehrt kann sich die Lebensdauer des Sensors aber auch erheblich verkürzen, wenn dieser vermehrt bei hohen Belastungen betrieben oder unsachgemäß montiert wird. Der Sensor kann auch Belastungsbereiche aufweisen, in denen er stärker geschädigt wird, als in anderen Belastungsbereichen. Lebensdauerprognosen die nur auf die Anzahl der Belastungszyklen abstellen sind daher unzuverlässig. Unter Umständen wird ein Sensor getauscht, der noch eine erhebliche Restlebensdauer hätte oder noch für einen anderen Einsatz geeignet wäre oder es fällt ein Sensor vorzeitig aus.

Es ist daher eine Aufgabe der gegenständlichen Erfindung ein Verfahren und eine Vorrichtung anzugeben, mit dem bzw. mit der eine Beurteilung der Restlebensdauer eines Sensors genauer aber trotzdem einfach möglich ist.

Diese Aufgabe wird für das Verfahren und die Vorrichtung gelöst, indem die Belastung des Sensors durch die Maschine in einem Belastungszyklus erfasst wird, in Abhängigkeit von der erfassten Belastung mittels eines Schädigungsmodells der Sensoreinheit für den Belastungszyklus ein Schädigungsfaktor für die Sensoreinheit ermittelt wird und zur Beurteilung der Restlebensdauer die gezählten Belastungszyklen mit dem jeweils ermittelten Schädigungsfaktor gewichtet werden. Mit der erfindungsgemäßen Methode wird die tatsächliche Schädigung des Sensors durch die tatsächlich auftretende Belastung des Sensors berücksichtigt, wodurch die Restlebensdauer zuverlässiger bestimmt werden kann. Die tatsächliche Lebensdauer des Sensors kann so optimal ausgenutzt werden. Durch das Schädigungsmodell kann die Belastung außerdem flexibel und anwendungsbezogen berücksichtigt werden. Außerdem ermöglicht die Erfindung, die Kalibrierintervalle oder die Verwendung des Sensors an die tatsächliche Schädigung anzupassen.

Ein ganze besonders vorteilhafte Ausgestaltung der Erfindung ergibt sich, wenn die Ermittlung des Schädigungsfaktors nur anhand der mit der Sensoreinheit erfassten Messgröße durchgeführt wird, da dann keine weiteren Messgrößen benötigt werden und das Verfahren bzw. die zugehörige Vorrichtung wesentlich vereinfacht werden kann.

Eine besonders einfache Beurteilung der Restlebensdauer erhält man, wenn die gewichteten Belastungszyklen von der spezifizierten Belastungszyklenanzahl subtrahiert werden. Alternativ kann die Restlebensdauer vorteilhaft auch in Form eines normierten Wertes angegeben werden.

Besonders vorteilhaft kann die Sensoreinheit anhand der ermittelten Restlebensdauer in zulässige Verwendungsarten kategorisiert werden. Unterschiedliche Anwendungen erfordern mit unter Sensoreinheiten unterschiedlicher Güte. So kann eine vorgeschädigte Sensoreinheit für eine Anwendung bereits ungeeignet sein, für eine andere aber noch ausreichend sein. Mit einer solchen Kategorisierung kann die verfügbare Lebensdauer und Verwendbarkeit der Sensoreinheit weiter ausgedehnt werden.

Ebenso ist es sehr vorteilhaft, die Kalibrierintervalle der Sensoreinheit anhand der ermittelten Restlebensdauer zu bestimmen, da vorgeschädigte Sensoreinheiten mit kürzeren Kalibrierintervallen trotzdem noch uneingeschränkt eingesetzt werden könnten.

Die gegenständliche Erfindung wird anhand der schematischen, nicht einschränkenden Figuren 1 bis 3, die vorteilhafte Ausführungsbeispiele der Erfindung zeigen, näher erläutert. Dabei zeigt

Fig. 1 ausschnittsweise einen Zylinder eines Verbrennungsmotors,
Fig. 2 schematische Darstellungen einer Vorrichtung zur Beurteilung der Restlebensdauer,
Fig. 3 eine schematische Darstellung einer erfassten Messgröße,
Fig. 4 und 5 schematische Darstellungen jeweils eines Schädigungsmodells für die Sensoreinheit,
Fig. 6 und 7 schematische Darstellungen jeweils eines Häufigkeits-Histogramms und
Fig. 8 eine Anordnung mit einer Sensorverwaltungseinheit.

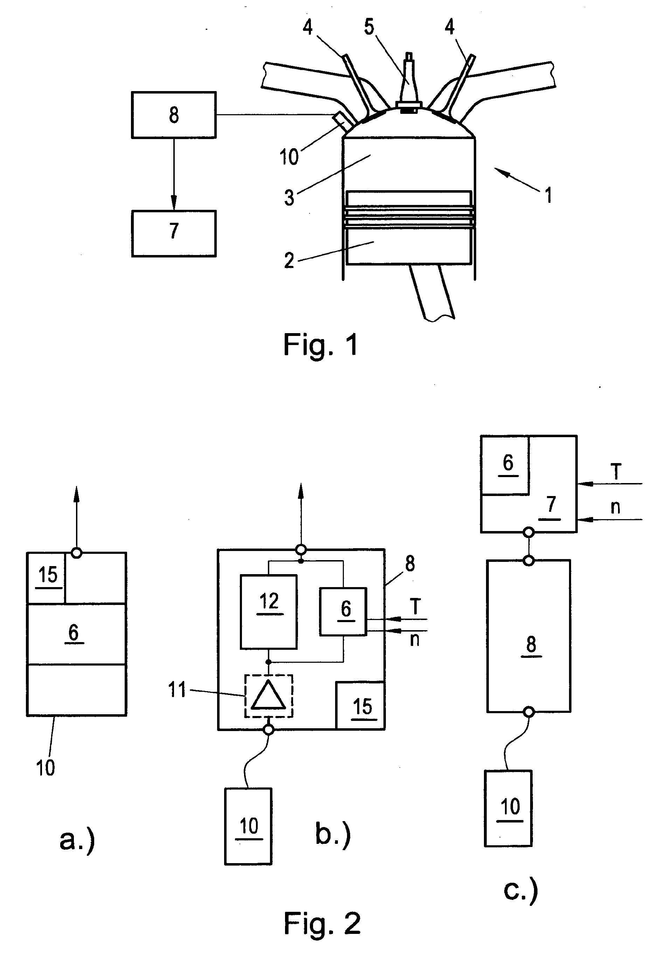

In Fig. 1 ist ausschnittsweise ein Zylinder 1 eines Verbrennungsmotors dargestellt. Im Zylinderhohlraum 3 wird ein Kolben 2 bewegt und am Zylinder 1 sind in bekannter Weise Ventile 4 und für den Fall eines Ottomotors eine Zündkerze 5 angeordnet, wobei die Erfindung natürlich auch bei Verbrennungsmotoren mit anderen Brennverfahren (z.B. Dieselmotor) und sowohl für 2-Takt auch als 4-Takt Motoren anwendbar ist. Außerdem ist am Zylinder 1 eine Indizieranordnung bestehend aus einer Sensoreinheit 10, z.B. ein piezoelektrischer Drucksensor, und einer Auswerteeinheit 8, z.B. ein Verstärker, angeordnet, die in diesem Fall den Zylinderdruck misst und auswertet. Die Sensoreinheit 10 kann aber z.B. auch ein Dehnungsmessstreifen, ein piezoresisitiver Druckaufnehmer, ein Körperschall-Klopfsensor, ein Sensor für die Schall- und Ultraschallemissionsanalyse, eine Ionenstromsonde, ein Flammlichtsensor, ein Sensor für Nadelhub, Ventilhub oder Kolbenhub, etc. sein. Unter einer Indizieranordnung wird allgemein in bekannter Weise eine Anordnung verstanden, die motorische Messgrößen, insbesondere, aber nicht ausschließlich, der Verbrennung, während des Betriebs, beispielsweise während eines Arbeitszyklus, mit einer bestimmten Auflösung der Abhängigkeit von Zeit oder Kurbelwinkel misst und/oder auswertet. Die Indizieranordnung bzw. die Auswerteeinheit 8 der Indizieranordnung kann, wie in diesem Beispiel, mit einer Steuereinrichtung 7, wie z.B. ein Motorsteuergerät einer Motorsteuerung oder mit einer sonstigen Verarbeitungseinheit, wie z.B. einer Prüfstandssteuerung eines Prüfstandes verbunden sein.

Die Erfindung kann auch bei anderen zyklisch arbeitende Maschinen angewendet werden, wie z.B. bei einer Spritzgussmaschine. In diesem Fall könnte die Steuereinrichtung 7 z.B. die Steuereinrichtung der Spritzgussmaschine sein.

Zur Beurteilung der Restlebensdauer der Sensoreinheit 10 ist eine Beurteilungseinheit 6 vorgesehen. Diese kann entweder direkt in der Sensoreinheit 10, wie in Fig. 2a dargestellt, in der Auswerteeinheit 8, wie in Fig. 2b dargestellt, oder auch in der übergeordneten Steuereinrichtung 7, wie in Fig. 2c dargestellt, angeordnet werden. Die Beurteilungseinheit 6 kann als Mikroprozessor, Signalprozessor oder auch als einfache logische oder elektrische Schaltung ausgeführt sein.

In der Auswerteeinheit 8 kann weiters eine Berechnungseinheit 12, wie z.B. ein Mikroprozessor oder ein DSP (Digital Signal Processor), angeordnet sein, mittels der die gemessene Messgröße, hier z.B. der Zylinderdruck $p_{zyl}$ im Zylinder 1, in gewünschter Weise weiterverarbeitet wird. Die dazu eventuell erforderliche Analog-Digital-Wandlung des Messsignals kann dabei direkt in der Berechnungseinheit 12 oder auch davor erfolgen. Das von der Berechnungseinheit 12 der Auswerteeinheit 8 bearbeitete Signal wird an einem Ausgang analog oder digital ausgegeben und z.B. an die Steuereinheit 7 weitergegeben. In einer einfachen Ausführung können die Beurteilungseinheit 6 und die Berechnungseinheit 12 natürlich auch als eine einzige Einheit ausgeführt sein.

Ebenfalls kann an der Sensoreinheit 10 oder der Auswerteeinheit 8 auch eine Anzeigeeinrichtung 15, wie z.B. ein einfaches LCD-Display oder eine Warnleuchte, angeordnet sein, an der die Restlebensdauer der Sensoreinheit 10 angezeigt werden kann.

Zwischen Sensoreinheit 10 und Berechnungseinheit 12 bzw. Beurteilungseinheit 6 kann in bekannter Weise auch ein Signalverstärker, insbesondere ein Ladungsverstärker 11 für einen piezoelektrischen Sensor, angeordnet sein, wie in Fig. 2b dargestellt. Außerdem können in der Auswerteeinheit 8 oder zwischen der Sensoreinheit 10 und der Auswerteeinheit 8, auch noch hier nicht dargestellte Filtereinheiten und/oder Signalkonditioniereinrichtungen, vorgesehen sein.

Um die Restlebensdauer der Sensoreinheit 10 bestimmen zu können, wird in der Beurteilungseinheit 6 die Belastung der Sensoreinheit 10 in einem Belastungszyklus $B_k$ ermittelt. Das kann an einem oder mehreren bestimmten diskreten Punkt(en) des Belastungszyklus sein, z.B. die Drehzahl n und das Drehmoment T beim Auftreten des Spitzendruckes $p_{max}$ bei der Verbrennung im Zylinder 1, oder es kann auch der Belastungsverlauf während des gesamten oder eines Teils des Belastungszyklus, also z.B. der gesamte Verbrennungsverlauf oder das gesamte Arbeitszyklus, aufgezeichnet und ausgewertet werden. Dazu können noch weitere Messgrößen, wie z.B. Drehzahl n, Drehmoment T oder Temperatur t des Verbrennungsmotors, benötigt werden. Diese können der Beurteilungseinheit 6 von außen zugeführt werden, wie in Fig. 2 angedeutet, oder diese Größen können unter Umständen in der Beurteilungseinheit 6 oder der Berechnungseinheit 12 auch direkt aus der Messgröße selbst ermittelt werden.

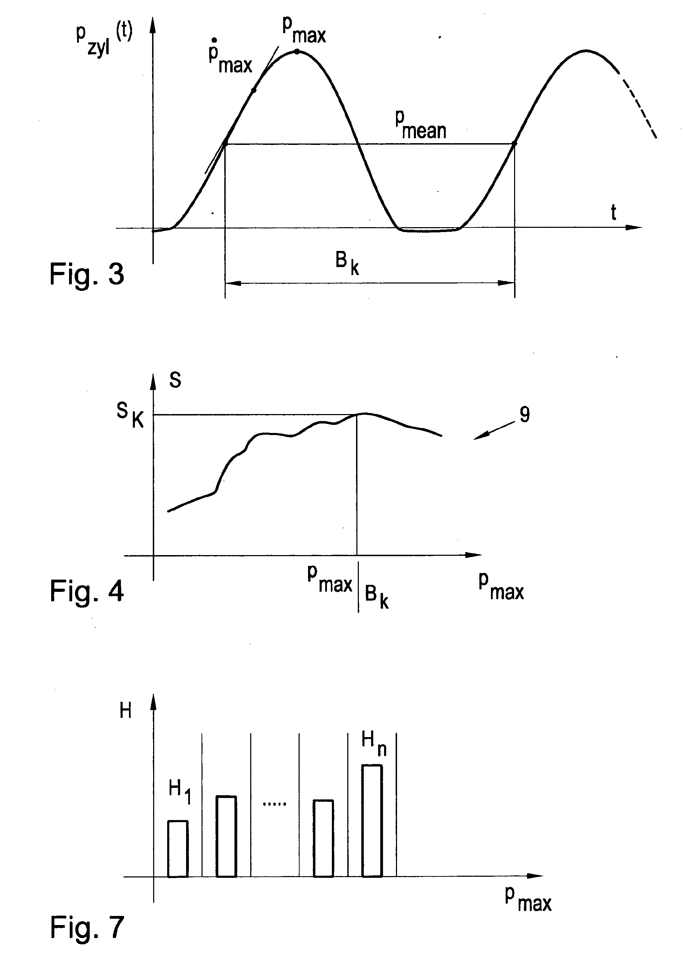

Besonders vorteilhaft wird die Beurteilung der Restlebensdauer nur anhand der von der Sensoreinheit 10 erfassten Messgröße, z.B. der Zylinderdruck $p_{zyl}$, vorgenommen. Dabei kann die Messgröße in der Auswerteeinheit 8, bzw. in der Berechnungseinheit 12 oder Beurteilungseinheit 6, auch den Anforderungen entsprechend ausgewertet oder weiterverarbeitet werden. In Fig. 3 ist z.B. ein typischer vereinfachter Verlauf des Zylinderdruckes $p_{zyl}$ dargestellt, der z.B. mit einem Zylinderdruckaufnehmer einer Indizieranordnung erfasst wird. Aus dem zeitlichen Verlauf können eine Reihe von charakteristischen Kenngrößen abgeleitet werden, die als Maß für die Belastung der Sensoreinheit 10 in einem Belastungszyklus $B_k$ herangezogen werden können. Als Beispiele seien hier für den Zylinderdruck der Spitzendruck $p_{max}$, der maximale Druckanstieg $\dot{p}_{max}$ oder der mittlere Zylinderdruck $p_{mean}$ genannt.

Selbstverständlich sind auch noch andere grundsätzlich bekannte Kenngrößen ableitbar. Weiters könnten aus dem zeitlichen Verlauf auch direkt die Belastungszyklen $B_k$ ermittelt werden. Ein Belastungszyklus $B_k$ zeichnet sich durch wiederkehrende ähnliche Belastungen aus, z.B. ein Verbrennungszyklus, der folglich aus einer Analyse des zeitlichen Verlaufs der Messgröße erkannt werden kann. Die Auswertung einer Messgröße im oben ausgeführten Sinn ist z.B. im österreichischen Gebrauchsmuster AT 009 242 U beschrieben.Der Belastungszustand des Belastungszyklus $B_k$ wird dann einem Schädigungsmodell 9 zugeführt, wie z.B. in Fig. 4 angedeutet. Das Schädigungsmodell 9 kann dabei in der Beurteilungseinheit 6, der Auswerteeinheit 8 oder der Steuereinheit 7 implementiert sein. Als Schädigungsmodell 9 kommt prinzipiell jedes physikalische, mathematische oder empirische Modell in Abhängigkeit bestimmter Parameter z.B. in Form eines formelmäßigen Zusammenhanges, einer numerischen Berechnung oder in Form einer hinterlegten Tabelle oder Kurve bzw. Fläche in Frage. Ebenso ist eine Simulation als Schädigungsmodell 9 denkbar. Die genaue Implementierung des Schädigungsmodells 9 ist für die Erfindung aber ohne Bedeutung und wird nachfolgend nur beispielhaft erläutert.

Im Ausführungsbeispiel nach Fig. 4 wird der Zylinderdruck $p_{zyl}$ messtechnisch erfasst und wie oben beschrieben hinsichtlich einer bestimmten Kenngröße ausgewertet - z.B. wird der maximale Zylinderdruck $p_{max}$ ermittelt. Mit dieser Kenngröße wird für den Belastungszyklus $B_k$ anhand des Schädigungsmodells 9 ein Schädigungsfaktor $S_k$ ermittelt. Das Schädigungsmodell 9 ist in diesem Beispiel in Form einer Schädigungskurve, z.B. erhalten aus Berechnungen, Simulationen oder aus empirischen Daten, in geeigneter Weise, z.B. als gespeicherte Tabelle oder als formelmäßiger Zusammenhang $S_k=f(p_{max})$, in der Auswerteeinheit 8 hinterlegt. Selbstverständlich kann der Schädigungsfaktor $S_k$ auch anhand von mehreren aus der Messgröße abgeleiteten Kenngrößen, z.B. maximaler Zylinderdruck $p_{max}$ und mittlerer Zylinderdruck $p_{mean}$, ermittelt werden, da die Schädigung der Sensoreinheit 10 durch eine Reihe von Einflussgrößen definiert sein kann.

Der Belastungszyklus $B_k$ wird nun mit diesem ermittelten Schädigungsfaktor $S_k$ gewichtet, sodass dieser Belastungszyklus $B_k$ mehr oder weniger stark die Restlebensdauer R der Sensoreinheit 10 reduziert. Wenn die spezifizierte Lebensdauer der Sensoreinheit 10 in Belastungszyklen (z.B. $10^8$ Belastungszyklen) mit L bezeichnet wird, dann kann die Restlebensdauer R in Belastungszyklen z.B. in Form $R = L - \sum_k S_k$ berechnet werden. Alternativ könnte auch eine normierte Restlebensdauer der Form $R = \dfrac{\sum_k S_k}{L}$ berechnet werden. Die Restlebensdauer ist dann ein Wert zwischen 0 und 1, wobei 0 für unbeschädigt und 1 für zerstört stehen kann. In diesem Fall ist die Schädigung des Sensors umso weiter fortgeschritten, je näher sich R der Zahl 1 annähert.

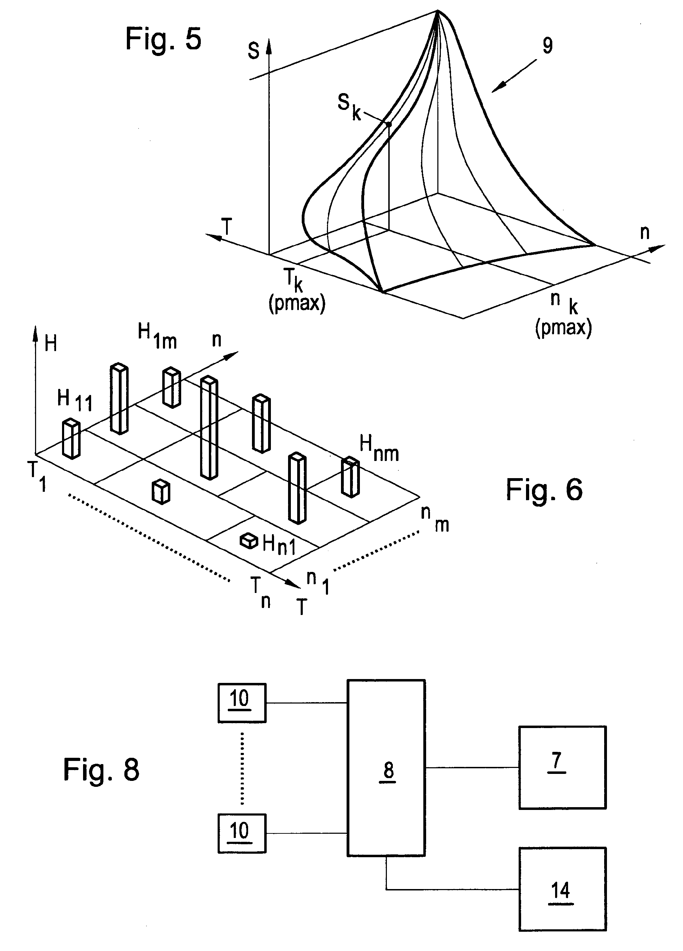

Es können aber auch andere Messgrößen zur Ermittlung eines Schädigungsfaktors $S_k$ herangezogen werden. Im Beispiel nach Fig. 5 wird in einem Belastungszyklus $B_k$ mit der Sensoreinheit 10 z.B. der Zylinderdruck $p_{zyl}$ gemessen. Die Drehzahl n und das Drehmoment T des Verbrennungsmotors wird parallel dazu erfasst und ebenfalls der Beurteilungseinheit 6 zugeführt. Z.B. wird beim Spitzendruck $p_{max}$ die Drehzahl $n_k$ und das Drehmoment $T_k$ ermittelt. In diesen Größen $n_k(p_{max})$ und $T_k(p_{max})$ sind weitere Parameter, wie z.B. die aktuelle Temperatur, die vom Lastpunkt abhängig ist, implizit enthalten und fließen so ebenfalls in das Schädigungsmodell ein. In einem zugehörigen Schädigungsmodell 9 ist in diesem Beispiel über die Drehzahl n und das Drehmoment T der Schädigungsfaktor S in Form einer Schädigungskurve, z.B. erhalten aus Berechnungen, Simulationen oder aus empirischen Daten, aufgespannt. In diesem Fall könnte es auch für unterschiedliche Spitzendrücke unterschiedliche Schädigungsmodelle 9 geben. Das Schädigungsmodell 9 kann aber natürlich auch mathematisch, z.B. als formelmäßiger Zusammenhang $S=f(p_{max}, T, n)$, in Abhängigkeit der Parameter hinterlegt sein. Mit den Werten $n_k$ und $T_k$ wird nun ein Schädigungsfaktor $S_k$ ermittelt. Der Belastungszyklus $B_k$ wird nun wieder mit diesem Schädigungsfaktor $S_k$ gewichtet, sodass dieser Belastungszyklus $B_k$ mehr oder weniger stark die Restlebensdauer R der Sensoreinheit 10 reduziert. Wenn die spezifizierte Lebensdauer der Sensoreinheit 10 in Belastungszyklen (z.B. $10^8$ Belastungszyklen) mit L bezeichnet wird, dann kann die Restlebensdauer R in Belastungszyklen z.B. in Form $R = L - \sum_k S_k$ berechnet werden. Alternativ könnte auch eine normierte Restlebensdauer der Form $R = \dfrac{\sum_k S_k}{L}$ berechnet werden. Die Restlebensdauer ist dann ein Wert zwischen 0 und 1, wobei 0 für unbeschädigt und 1 für zerstört stehen kann. In diesem Fall ist die Schädigung des Sensors umso weiter fortgeschritten, je näher sich R der Zahl 1 annähert.

Es ist aber auch denkbar, die Restlebensdauer R erst nach einer bestimmten Anzahl von Belastungszyklen $B_k$ oder nach einer bestimmten Zeit neu zu berechnen, um die Rechenbelastung zu reduzieren.

Das Schädigungsmodell 9 kann aber auch andere Eingangsparameter haben, wie z.B. der mittlere Zylinder-

druck $p_{mean}$ (indicated mean effective pressure) und die Drehzahl n oder der mittlere Zylinderdruck $p_{mean}$ und die aktuelle Sensortemperatur. In diesem Fall könnte eine Schädigungskurve bzw. -fläche über diesen Parametern aufgespannt sein. Ebenso kann das Schädigungsmodell 9 auch von mehr als zwei Parametern abhängig sein, sodass sich der Schädigungsfaktor allgemein als $S=f(P_1,...,P_n)$ darstellen lässt, mit P als beliebiger Parameter, wie z.B. die Drehzahl n, das Drehmoment T, die Sensortemperatur t, der mittlere Zylinderdruck $p_{mean}$, der Spitzendruck $p_{max}$, etc.

Beim oben beschriebenen Verfahren wird somit jeder Belastungszyklus $B_K$ einzeln und sofort bewertet und der Restlebensdauerberechnung zugeführt. Es kann aber auch die Häufigkeit H (in Belastungszyklen) des Auftretens bestimmter Belastungszustände ermittelt werden und daraus eine Schädigung und die Restlebensdauer der Sensoreinheit 10 berechnet werden.

In Fig. 6 ist z.B. der Drehmomenten-Drehzahl-Bereich (oder z.B. auch ein $p_{max}$-$\dot{p}_{max}$ -Bereich) des Verbrennungsmotors in bestimmte Belastungs-Teilbereiche unterteilt. Wird nur die mit der Sensoreinheit 10 erfasste Messgröße für die Auswertung herangezogen und daraus eine Kenngröße abgeleitet, so kann die Häufigkeit H des Auftretens bestimmter Kenngrößenbereiche herangezogen werden, wie z.B. in Fig. 7 dargestellt. Es wird nun für eine bestimmte Zeitdauer, z.B. Anzahl von Belastungszyklen $B_k$ oder eine bestimmte Zeit, die Häufigkeit H des Auftretens der festgelegten Belastungszustände, z.B. Drehmoment $T_n$ bei Drehzahl $n_m$ bei $p_{max}$ oder nur $p_{max}$, gezählt. Aus dieser Erfassung erhält man z.B. ein Häufigkeits-Histogramm, wie in Fig. 6 oder 7 dargestellt. Diese ermittelten Häufigkeiten $H_{nm}$ bzw. $H_n$ können nun mit einem zugeordneten Schädigungsfaktor S gewichtet werden. Dazu kann wieder ein Schädigungsmodell 9, z.B. wie in Fig. 4 oder 5 dargestellt, herangezogen werden. Das Schädigungsmodell 9 ist dabei vorteilhaft ebenso in die interessierenden Belastungs-Teilbereiche diskretisiert. Alternativ dazu könnte auch ein entsprechender Mittelwert aus dem Schädigungsmodell 9 für einen Belastungs-Teilbereich herangezogen werden. Daraus kann wiederum eine Restlebensdauer R, z.B. in der Form $R = L - \sum_{n} \sum_{m} H_{nm} S_{nm}$ bzw. $R = L - \sum_{n} H_n S_n$ berechnet werden. Die Restlebensdauer R kann dabei natürlich auch wiederum als normierte Größe ermittelt werden. L kann dabei wieder die spezifizierte Lebensdauer oder die ermittelte Restlebensdauer der vorhergehenden Berechnung sein. Alternativ könnten die Häufigkeiten der Belastungszustände auch ständig gezählt werden und nur die Berechnung der Restlebensdauer in bestimmten Abständen durchgeführt werden.

Die Restlebensdauer R kann nun z.B. direkt an einer Anzeigeeinrichtung 15 an der Sensoreinheit 10 oder der Auswerteeinheit 8 ausgegeben werden, oder wird in einer übergeordneten Einheit, z.B. der Steuereinheit 7 oder einer Prüfstandssoftware oder eine Sensorverwaltungseinheit, entsprechend verarbeitet. Erreicht die Sensoreinheit 10 eine bestimmte Schädigung in Form einer definierten Restlebensdauer R kann diese z.B. getauscht werden.

Die Sensoreinheit 10 könnte aber auch hinsichtlich ihrer Verwendbarkeit in Abhängigkeit von der Restlebensdauer R kategorisiert werden, z.B. in der Form der nachfolgenden Tabelle.

| Restlebensdauer R in Belastungszyklen | | | | |
|---|---|---|---|---|
| >50 Mio. | >20 Mio. | ... | >5 Mio. | >1 Mio. |
| Verwendung 1 | Verwendung 2 | ... | Verwendung n-1 | Verwendung n |

Die Sensoreinheit 10 kann bei Erreichen einer bestimmten Restlebensdauer R für eine bestimmte Verwendung nicht mehr geeignet sein, sehr wohl aber noch für eine andere, z.B. weniger anspruchsvolle, Verwendung. Z.B. kann ein Drucksensor für thermodynamische Untersuchungen, bei denen eine hohe Genauigkeit erforderlich ist, bereits ungeeignet sein, kann aber z.B. für Motorapplikationen noch verwendet werden.

Ebenso kann ein Kalibrierungsintervall für eine Sensoreinheit 10 an die aktuelle Schädigung bzw. Restlebensdauer R angepasst werden. Z.B. kann das Kalibrierintervall verkürzt werden, je geringer die Restlebensdauer R ist.

Ebenso ist es denkbar, dass das Schädigungsmodell 9 im Betrieb adaptiv angepasst wird. Durch den Betrieb der Sensoreinheit 10 oder durch laufende Untersuchungen an ausgeschiedenen oder benutzten Sensoreinheiten 10 erhält man viele Erfahrungswerte, die nachträglich in das Schädigungsmodell 9 einfließen können, um das Schädigungsmodell 9 genauer zu machen und anzupassen und die Verwendbarkeit der Sensoreinheit 10 zu maximieren. Dieser Vorgang kann auch automatisiert ablaufen.

Die Sensoreinheiten 10 mit den zugeordneten ermittelten Restlebensdauern R können auch in einer Sensorverwaltungseinheit 14 verwaltet werden, wie in Fig. 8 angedeutet. In einer solchen Sensorverwaltungseinheit 14 kann z.B. hinterlegt sein, wann bzw. in welchen Abständen eine Sensoreinheit 10 zu kalibrieren bzw. zu testen ist, womit bei der Kalibrierung oder beim Selbsttest auf die tatsächliche Schädigung der Sensoreinheit 10 Rücksicht genommen werden kann, oder für welche Einsätze eine Sensoreinheit 10 mit einer bestimmten Schädigung noch brauchbar ist. Die Sensorverwaltungseinheit 14 ist z.B. eine Datenbank, die die Sensoreinheiten 10 verwaltet und Daten von den einzelnen Sensoreinheiten 10 (oder der Auswerteeinheit 8, wie in Fig. 8, oder der Steuereinheit 7) erhält.

**Patentansprüche**

1. Verfahren zur Beurteilung der Restlebensdauer (R) eines an einer zyklisch arbeitenden Maschine angebrachten und für eine bestimmte Anzahl von Belastungszyklen (B) spezifizierten Sensoreinheit (10), **dadurch gekennzeichnet, dass** die Belastung der Sensoreinheit durch die Maschine in einem Belastungszyklus (B) erfasst wird, dass in Abhängigkeit von der erfassten Belastung mittels eines Schädigungsmodells (9) der Sensoreinheit (10) für den Belastungszyklus (B) ein Schädigungsfaktor (S) für die Sensoreinheit (10) ermittelt wird und dass zur Beurteilung der Restlebensdauer (R) der Belastungszyklus (B) mit dem jeweils ermittelten Schädigungsfaktor (S) gewichtet wird.

2. Verfahren nach Anspruch 1, **dadurch gekennzeichnet, dass** zur Ermittlung des Schädigungsfaktors (S) nur die von der Sensoreinheit (10) erfasste Messgröße verwendet wird.

3. Verfahren nach Anspruch 1 oder 2, **dadurch gekennzeichnet, dass** jeder Belastungszyklus (B) einzeln gewichtet und laufend die Restlebensdauer (R) ermittelt wird.

4. Verfahren nach Anspruch 1 oder 2, **dadurch gekennzeichnet, dass** jeder Belastungszyklus (B) einzeln gewichtet und die Restlebensdauer (R) nach einer bestimmten Anzahl von Belastungszyklen (B) oder einer bestimmten Zeit ermittelt wird.

5. Verfahren nach Anspruch 1 oder 2, **dadurch gekennzeichnet, dass** die Häufigkeit (H) des Auftretens eines bestimmten Belastungszustandes in Belastungszyklen (B) gezählt und die gezählte Häufigkeit (H) zur Ermittlung der Restlebensdauer (R) mit dem für den Belastungszustand (B) ermittelten Schädigungsfaktor (S) gewichtet wird.

6. Verfahren nach einem der Ansprüche 1 bis 5, **dadurch gekennzeichnet, dass** die gewichteten Belastungszyklen (B) bzw. die gewichtete Häufigkeit (H) der Belastungszyklen (B) von der spezifizierten Belastungszyklenanzahl (L) subtrahiert werden.

7. Verfahren nach einem der Ansprüche 1 bis 5, **dadurch gekennzeichnet, dass** die gewichteten Belastungszyklen (B) bzw. die gewichtete Häufigkeit (H) der Belastungszyklen (B) mit einem vorgegebenen Wert, vorzugsweise die spezifizierte Anzahl (L) der zulässigen Belastungszyklen, normiert werden.

8. Verfahren nach einem der Ansprüche 1 bis 7, **dadurch gekennzeichnet, dass** die Sensoreinheit (10) anhand der ermittelten Restlebensdauer (R) in zulässige Verwendungsarten kategorisiert wird.

9. Verfahren nach einem der Ansprüche 1 bis 8, **dadurch gekennzeichnet, dass** ein Kalibrierintervall oder ein Selbsttestintervall der Sensoreinheit (10) anhand der ermittelten Restlebensdauer (R) bestimmt wird.

10. Vorrichtung zur Beurteilung der Restlebensdauer (R) einer an einer zyklisch arbeitenden Maschine angebrachten und für eine bestimmte Anzahl von Belastungszyklen (B) spezifizierten Sensoreinheit (10), **dadurch gekennzeichnet, dass** eine Beurteilungseinheit (6) und ein Schädigungsmodell (9) vorgesehen sind und dass in der Beurteilungseinheit (6) in Abhängigkeit der Belastung der Sensoreinheit (10) für einen Belastungszyklus (B) anhand des Schädigungsmodells (9) ein Schädigungsfaktor (S) ermittelt wird und zur Beurteilung der Restlebensdauer (R) der Belastungszyklus (B) mit dem Schädigungsfaktor (S) gewichtet wird.

11. Vorrichtung nach Anspruch 10, **dadurch gekennzeichnet, dass** die Beurteilungseinheit (6) in der Sensoreinheit (10) angeordnet ist.

12. Vorrichtung nach Anspruch 10, **dadurch gekennzeichnet, dass** die Beurteilungseinheit (R) in einer mit der Sensoreinheit (10) verbundenen Auswerteeinheit (8) angeordnet ist.

13. Vorrichtung nach Anspruch 10, **dadurch gekennzeichnet, dass** die Beurteilungseinheit (6) in einer Steuereinheit (7), die mit der mit der Sensoreinheit (10) verbundenen Auswerteeinheit (8) verbunden ist, angeordnet ist.

14. Vorrichtung nach einem der Ansprüche 10 bis 13, **dadurch gekennzeichnet, dass** an der Sensoreinheit (10), an der Auswerteeinheit (8) oder an der Steuereinheit (7) eine Ausgabeeinrichtung (15) zur Ausgabe der Restlebensdauer (R) der Sensoreinheit (10) vorgesehen ist.

15. Vorrichtung nach einem der Ansprüche 10 bis 14, **dadurch gekennzeichnet, dass** eine Sensorverwaltungseinheit (14) vorgesehen ist, in der die Sensoreinheit (10) zusammen mit der zugeordneten ermittelten Restlebensdauer (R) verwaltet wird.

16. Verbrennungsmotor mit einer Sensoreinheit (10) zum Erfassen einer motorischen Messgröße und mit einer Vorrichtung zur Beurteilung der Restlebensdauer (R) der Sensoreinheit (10) gemäß einem der Ansprüche 10 bis 15.

**Claims**

1. Method for assessing the residual life (R) of a sensor unit (10), which is fitted on a cyclically operating machine and is intended for a certain number of loading cycles (B), **characterized in that** the loading of the sensor unit by the machine in a loading cycle (B) is detected, **in that** a damage factor (S) for the sensor unit (10) is determined as a function of the detected loading by means of a damage model (9) of the sensor unit (10) for the loading cycle (B), **and in that**, in order to assess the residual life (R), the loading cycle (B) is weighted with the respectively determined damage factor (S).

2. Method according to Claim 1, **characterized in that** only the measured variable detected by the sensor unit (10) is used to determine the damage factor (S).

3. Method according to Claim 1 or 2, **characterized in** 6 that each loading cycle (B) is weighted individually and the residual life (R) is determined continuously.

4. Method according to Claim 1 or 2, **characterized in that** each loading cycle (B) is weighted individually and the residual life (R) is determined after a certain number of loading cycles (B) or a specific time.

5. Method according to Claim 1 or 2, **characterized in that** the frequency (H) of the occurrence of a specific loading state in loading cycles (B) is counted and the counted frequency (H) is weighted with the damage factor (S) determined for the loading state (B) in order to determine the residual life (R).

6. Method according to one of Claims 1 to 5, **characterized in that** the weighted loading cycles (B) or the weighted frequency (H) of the loading cycles (B) is subtracted from the specified loading cycle number (L).

7. Method according to one of Claims 1 to 5, **characterized in that** the weighted loading cycles (B) or the weighted frequency (H) of the loading cycles (B) is standardized with a predetermined value, preferably the specified number (L) of permissible loading cycles.

8. Method according to one of Claims 1 to 7, **characterized in that** the sensor unit (10) is categorized into permissible use types using the determined residual life (R).

9. Method according to one of Claims 1 to 8, **characterized in that** a calibration interval or a self-testing interval of the sensor unit (10) is determined using the determined residual life (R).

10. Apparatus for assessing the residual life (R) of a sensor unit (10), which is fitted on a cyclically operating machine and is intended for a certain number of loading cycles (B), **characterized in that** an assessment unit (6) and a damage model (9) are provided, and **in that**, in the assessment unit (6), a damage factor (S) is determined as a function of the loading of the sensor unit (10) for a loading cycle (B) using the damage model (9), and the loading cycle (B) is weighted with the damage factor (S) in order to assess the residual life (R).

11. Apparatus according to Claim 10, **characterized in that** the assessment unit (6) is arranged in the sensor unit (10),

12. Apparatus according to Claim 10, **characterized in that** the assessment unit (6) is arranged in an evaluation unit (8), which is connected to the sensor unit (10).

13. Apparatus according to Claim 10, **characterized in that** the assessment unit (6) is arranged in a control unit (7), which is connected to the evaluation unit (8), which is connected to the sensor unit (10).

**14.** Apparatus according to one of Claims 10 to 13, **characterized in that** an output device (15) for outputting the residual life (R) of the sensor unit (10) is provided on the sensor unit (10), on the evaluation unit (8) or on the control unit (7).

**15.** Apparatus according to one of Claims 10 to 14, **characterized in that** a sensor management unit (14) is provided in which the sensor unit (10) together with the associated determined residual life (R) is managed.

**16.** Internal combustion engine with a sensor unit (10) for detecting a measured motor variable and with an apparatus for assessing the residual life (R) of the sensor unit (10) according to one of Claims 10 to 15.


**Revendications**

**1.** Procédé pour estimer la durée de vie restante (R) d'une unité capteur (10) montée sur une machine à travail cyclique et conçue pour un nombre défini de cycles de charge (B), **caractérisé par le fait que** la charge appliquée à l'unité capteur par la machine dans un cycle de charge (B) est détectée, qu'en fonction de la charge détectée, un coefficient de détérioration (S) pour l'unité capteur (10) est déterminé au moyen d'un modèle de détérioration (9) de l'unité capteur (10) pour le cycle de charge (B), et que, pour l'estimation de la durée de vie restante (R), le cycle de charge (B) est pondéré avec le coefficient de détérioration (S) qui a été déterminé respectivement.

**2.** Procédé selon la revendication 1, **caractérisé par le fait que**, pour la détermination du coefficient de détérioration (S), on utilise exclusivement la grandeur de mesure détectée par l'unité capteur (10).

**3.** Procédé selon l'une des revendications 1 ou 2, **caractérisé par le fait que** chaque cycle de charge est pondéré individuellement et la durée de vie restante (R) est déterminée de façon continue.

**4.** Procédé selon l'une des revendications 1 ou 2, **caractérisé par le fait que** chaque cycle de charge (B) est pondéré individuellement et la durée de vie restante (R) est déterminée après un nombre défini de cycles de charge (B) ou après un temps défini.

**5.** Procédé selon l'une des revendications 1 ou 2, **caractérisé par le fait que** la fréquence (H) de l'apparition d'un état défini de charge dans des cycles de charge (B) est comptée et, pour la détermination de la durée de vie restante (R), la fréquence (H) comptée est pondérée avec le coefficient de détérioration (S) déterminé pour l'état de charge (B).

**6.** Procédé selon l'une des revendications 1 à 6, **caractérisé par le fait que** les cycles de charge pondérés (B) ou la fréquence pondérée (H) des cycles de charge (B) est ou sont soustraites du nombre spécifié (L) des cycles de charge.

**7.** Procédé selon l'une des revendications 1 à 6, **caractérisé par le fait que** les cycles de charge pondérés (B) ou la fréquence pondérée (H) des cycles de charge (B) sont normés avec une valeur prédéterminée, de préférence le nombre spécifié (L) des cycles de charge admissibles.

**8.** Procédé selon l'une des revendications 1 à 7, **caractérisé par le fait que** l'unité capteur (10) est catégorisée en sortes d'utilisation admissibles sur la base de la durée de vie restante (R).

**9.** Procédé selon une des revendications 1 à 8, **caractérisé par le fait qu'**un intervalle d'étalonnage ou un intervalle d'auto-test de l'unité capteur (10) est défini sur la base de la durée de vie restante (R) déterminée.

**10.** Dispositif pour l'estimation de la durée de vie restante (R) d'une unité capteur (10) montée sur une machine à travail cyclique et conçue pour un nombre défini de cycles de charge (B), **caractérisé par le fait qu'**est prévue une unité d'estimation (6) et un modèle de détérioration (9) et que, dans l'unité d'estimation (6), un coefficient de détérioration (S) est déterminé en fonction de la charge de l'unité capteur (10) pour un cycle de charge (B) sur la base du modèle de détérioration (9) et, pour l'estimation de la durée de vie restante, le cycle de charge (B) est pondéré avec la coefficient de détérioration (S).

**11.** Dispositif selon la revendication 10, **caractérisé par le fait que** l'unité d'estimation (6) est disposée dans l'unité capteur (10).

**12.** Dispositif selon la revendication 10, **caractérisé par le fait que** l'unité d'estimation (6) est disposée dans une unité d'évaluation (8) reliée à l'unité capteur (10).

13. Dispositif selon la revendication 10, **caractérisé par le fait que** l'unité d'estimation (6) est disposée dans une unité de commande (7) qui est reliée à l'unité d'évaluation (8) reliée à l'unité capteur (10).

14. Dispositif selon l'une des revendications 10 à 13, **caractérisé par le fait que** sur l'unité capteur (10), sur l'unité d'évaluation (8) ou sur l'unité de commande (7) est prévu un dispositif de sortie (15) servant à émettre la durée de vie restante (R) de l'unité capteur (10).

15. Dispositif selon l'une des revendications 10 à 14, **caractérisé par le fait qu'**il est prévue une unité de gestion de capteur (14) dans laquelle l'unité capteur (10) est gérée en même temps que la durée de vie restante (R) déterminée correspondante.

16. Moteur à combustion équipé d'une unité capteur (10) destinée à détecter une grandeur de mesure du moteur et d'un dispositif pour l'estimation de la durée de vie restante (R) de l'unité capteur (10) selon l'une des revendications 10 à 15.

Fig. 1

a.)

b.)

c.)

Fig. 2

Fig. 3

Fig. 4

Fig. 7

Fig. 5

$S$

$S_k$

9

$T$

$n$

$T_k$
(pmax)

$n_k$
(pmax)

$H$

$H_{1m}$

$n$

$H_{11}$

$H_{nm}$

$T_1$

$H_{n1}$

$n_m$

Fig. 6

$T_n$

$n_1$

$T$

Fig. 8

10

8

7

10

14

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- AT 009242 U